(19) Europäisches Patentamt

European Patent Office

Office européen des brevets

(11)  EP 2 525 895 B1

(12)  FASCICULE DE BREVET EUROPEEN

(45) Date de publication et mention
de la délivrance du brevet:
**22.03.2017 Bulletin 2017/12**

(21) Numéro de dépôt: **11705003.9**

(22) Date de dépôt: **06.01.2011**

(51) Int Cl.:
*B01D 53/14* (2006.01)      *B01D 53/50* (2006.01)
*B01D 53/62* (2006.01)      *B01D 53/75* (2006.01)
*B01D 53/78* (2006.01)      *F23J 15/04* (2006.01)

(86) Numéro de dépôt international:
**PCT/FR2011/000010**

(87) Numéro de publication internationale:
**WO 2011/089332 (28.07.2011 Gazette 2011/30)**

(54)  **PROCÉDÉ INTÉGRÉ DE DÉCARBONATATION ET DE DÉSULFURATION D'UNE FUMÉE DE COMBUSTION**

INTEGRIERTES VERFAHREN ZUR ENTKARBONISIERUNG UND ENTSCHWEFELUNG EINES RAUCHGASES

INTEGRATED DECARBONATION AND DESULPHURISATION PROCESS OF A FLUE GAS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.01.2010 FR 1000224**

(43) Date de publication de la demande:
**28.11.2012 Bulletin 2012/48**

(73) Titulaire: **IFP Énergies nouvelles**
**92852 Rueil-Malmaison Cedex (FR)**

(72) Inventeurs:
• **BOUILLON, Pierre-Antoine**
**F-69003 Lyon (FR)**
• **JACQUIN, Marc**
**F-69002 Lyon (FR)**

• **GOMEZ, Adrien**
**F-69003 Lyon (FR)**

(56) Documents cités:
**EP-A2- 0 815 922      FR-A1- 2 898 284**
**US-A1- 2004 253 159**

• **DATABASE WPI Week 199417 Thomson Scientific, London, GB; AN 1994-140595 XP002592147, & JP 6 086911 A (MITSUBISHI JUKOGYO KK) 29 mars 1994 (1994-03-29)**
• **KOHL A L ET AL: "Gas purification, Fifth edition, Chapter 3 : Mechanical Design and Operation of Alkanolamine Plants", 1 January 1997 (1997-01-01), GAS PURIFICATION, GULF PUBLISHING COMPANY, HOUSTON, TEXAS, XP002550025, ISBN: 978-0-88415-220-0**

**Description**

La présente invention concerne le domaine du captage du dioxyde de carbone ($CO_2$) et des oxydes de soufre ($SO_2$, $SO_3$...) contenus dans les fumées de combustion.

Pour réduire le réchauffement climatique provoqué par l'émission massive de $CO_2$ dans l'atmosphère, on envisage de capter le $CO_2$ contenu dans les fumées de combustion afin de le séquestrer dans des stockages souterrains. Une technique d'extraction consiste à capter le $CO_2$ dilué dans les fumées produite par la combustion à l'air d'un combustible fossile ou de biomasse. Le document EP 553 643 propose de capter le $CO_2$ par absorption avec une solution aqueuse de monoéthanolamine (MEA).

Cependant, dans le cas particulier des fumées de combustion, la présence de soufre dans le combustible est responsable de la présence d'oxydes de soufre dans les fumées à traiter. Les solvants utilisés classiquement pour capter le $CO_2$ de ces fumées à basse pression sont très sensibles aux oxydes de soufre, rendant obligatoire une étape de désulfuration en amont de l'unité de captage. C'est notamment le cas de la MEA (monoéthanolamine) qui nécessite un niveau de désulfurisation élevé des fumées (typiquement une teneur en soufre totale inférieure à 20mg/$Nm^3$) afin d'éviter une dégradation irréversible de l'amine (Supap et al., Kinetics of sulfur dioxide and oxygene induced dégradation of aqueous monoethanolamine solution during CO2 absorption from power plant flue gas streams, International Journal of Greenhouse Gas Control, 2009, 3, 133-142).

Par ailleurs, même si l'on utilisait pour le captage du $CO_2$ en post-combustion, une amine particulièrement stable aux oxydes de soufre, ces derniers entraîneraient nécessairement une altération des performances du solvant. En effet, les oxydes de soufres sont des acides forts, qui réagissent avec les bases fortes que sont les amines, par une réaction totale. L'étape de régénération thermique du solvant permet de libérer le $CO_2$ (acide faible), mais pas les oxydes de soufre (acides forts) qui sont piégés sous la forme de sels, dits non régénérables. Ces derniers en s'accumulant, diminuent la quantité d'amine disponible pour le captage du $CO_2$, et altèrent ainsi les performances du solvant. C'est pourquoi, les procédés de décarbonatation mettent généralement en oeuvre une unité de désulfuration.

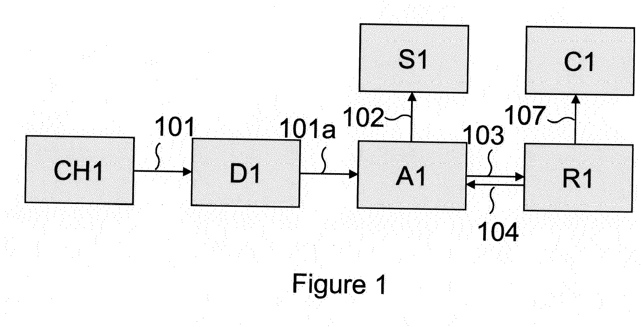

Un procédé de désulfuration et de décarbonatation selon l'art antérieur est décrit en référence à la figure 1. Les fumées circulant dans le conduit 101 sortent de l'unité de combustion CH1 et entrent dans l'unité de désulfuration D1. Une fois aux spécifications en terme de quantité totale de soufre, le gaz désulfuré entre dans une unité de captage du $CO_2$ constitué par A1 et R1 par le conduit 101a où il est mis en contact avec la solution absorbante dans l'unité A1, par exemple une colonne d'absorption gaz/liquide. Les fumées décarbonatées sont évacuées de A1 par le conduit 102 et introduites dans l'unité SI qui peut mettre en oeuvre une étape de traitement ultérieure ou un rejet à l'atmosphère par l'intermédiaire d'une cheminée. La solution absorbante chargée en $CO_2$ est envoyée vers une étape de régénération R1 par le conduit 103. Le gaz acide est évacué en tête de R1 par le conduit 107 vers une étape de traitement ultérieure C1, par exemple une étape de conditionnement pour transport. La solution absorbante régénérée est renvoyée l'unité A1 pour un nouveau cycle d'absorption par le conduit 104.

Le document EP815922 décrit un procédé de désulfuration et décarbonatation d'un gaz par mise en oeuvre d'une solution absorbante comportant des composés aminés, dans lequel on effectue une étape de désulfuration du gaz, suivie d'une étape de décarbonatation comme illustré à la figure 1. Lors de la décarbonatation, une première portion de la solution absorbante régénérée est soumise à une étape d'extraction des oxydes de soufre par addition d'une substance de calcium basique alors qu'une deuxième portion de la solution absorbante régénérée est recyclée en tant que solution abrobante pour l'étape de décarbonatation.L'ajout d'une unité supplémentaire de désulfuration n'est pas sans conséquence sur l'ensemble du procédé de captage du $CO_2$. La désulfuration est classiquement effectuée par lavage du gaz avec une solution de chaux dans une tour de mise en contact gaz/liquide. En plus d'une augmentation conséquente de l'investissement du procédé de captage, l'ajout d'une colonne de contact gaz/liquide provoque une perte de charge supplémentaire sur le circuit des fumées. Cette perte de charge, qu'il conviendra de vaincre par l'installation d'un ventilateur, est responsable de coûts opératoires importants. De plus, même si les fumées de combustion à décarbonater sont désulfurées au préalable, des dégradations irréversibles du solvant induites par la présence d'oxydes de soufre peuvent se produire et nécessitent des opérations de purification du solvant plus fréquentes, ce qui induit des coûts opératoires supérieurs. Par exemple, dans le cas de la MEA, la cinétique de dégradation de l'amine admet un ordre apparent partielle par rapport à la concentration de $SO_2$ de 3,5 (Supap et al., Kinetics of sulfur dioxide and oxygène induced dégradation of aqueous monoethanolamine solution during CO2 absorption from power plant flue gas streams, International Journal of Greenhouse Gas Control, 2009, 3, 133-142). Ainsi, même en très faible quantité, le dioxyde de soufre induit une très forte dégradation de la MEA.

Le document J6086911 divulgue un procédé de désulfuration et décarbonatation simultanées par mise en oeuvre d'une solution absorbante de MEA, dans lequel les oxydes de soufre sont séparés de l'aminé par addition de CaOH et effet centrifuge dans un second régénérateur.Afin de limiter ces inconvénients, le procédé selon l'invention propose d'effectuer une unique étape d'absorption du $CO_2$ et du $SO_2$, utilisant une solution aqueuse de TMHDA résistante aux composés soufrés, mettant en oeuvre une étape d'extraction des oxydes de soufre absorbés par la solution aqueuse de TMHDA.

De manière générale, l'invention décrit un procédé de décarbonatation et de désulfuration d'une fumée de combustion produite par la combustion d'un combustible contenant du soufre pour produire une fumée de combustion comportant du $CO_2$ et des oxydes de soufre, dans lequel on effectue les étapes suivantes:

a) on met en contact la fumée de combustion avec une solution aqueuse comportant de la N,N,N',N'-Tétraméthylhexane-1,6-diamine dans une zone de contact de manière à obtenir une fumée de combustion appauvrie en $CO_2$ et en oxydes de soufre et une solution absorbante chargée en $CO_2$ et en oxydes de soufre,

b) on régénère au moins une partie de la solution absorbante chargée en $CO_2$ et en oxydes de soufre dans une zone de régénération de manière à libérer du $CO_2$ sous forme gazeuse et à obtenir une solution absorbante régénérée,

c) on soumet au moins une première portion de la solution absorbante régénérée à une opération d'extraction des oxydes de soufre pour obtenir une solution absorbante appauvrie en oxyde de soufre,

d) on recycle une deuxième portion de la solution absorbante régénérée en tant que solution aqueuse comportant de la N,N,N',N'-Tétraméthylhexane-1,6-diamine à l'étape b).

Selon l'invention, à l'étape c), on prélève ladite première portion de la solution absorbante régénérée, on introduit un produit basique dans ladite première portion, on sépare ladite première portion en une phase liquide enrichie en eau et une phase liquide enrichie en N,N,N',N'-Tétraméthylhexane-1,6-diamine, puis on soumet au moins une fraction de la phase liquide enrichie en eau à une opération d'extraction (P) des oxydes de soufre pour obtenir une solution absorbante appauvrie en oxyde de soufre. L'opération d'extraction des oxydes de soufre est réalisée par distillation en vaporisant la fraction de la phase liquide enrichie en eau de manière à obtenir une fraction vaporisée et une fraction liquide, la fraction vaporisée étant introduite dans la zone de régénération.

Le produit basique peut être choisi parmi la soude et la potasse.

La phase liquide enrichie en N,N,N',N'-Tétraméthylhexane-1,6-diamine peut être introduite dans la zone de contact.

Avant l'étape b), on peut effectuer une étape de séparation d'au moins une fraction de la solution absorbante chargée en C02 et en oxydes de soufre en une phase enrichie en eau et une phase enrichie en N,N,N',N'-Tétraméthylhexane-1,6-diamine, la phase enrichie en eau étant introduite dans la zone de régénération, la phase enrichie en N,N,N',N'-Tétraméthylhexane-1,6-diamine étant introduite dans la zone de mise en contact. Avant l'étape de séparation, la solution absorbante chargée en composés acides peut être chauffée à une température comprise entre 50°C et 150°C.

La solution absorbante peut comporter entre 20% et 50% poids de N,N,N',N'-Tétraméthylhexane-1,6-diamine et entre 50% et 80% poids d'eau.

D'autres caractéristiques et avantages de l'invention seront mieux compris et apparaîtront clairement à la lecture de la description faite ci-après en se référant aux dessins parmi lesquels :

- la figure 1 présente un procédé selon l'art antérieur,
- la figure 2 schématise le procédé selon l'invention,
- les figures 3 à 7 représentent différents modes de réalisation d'un procédé de décarbonatation et de désulfuration d'une fumée de combustion, les figures 4 et 5 représentant des modes de réalisation du procédé selon l'invention.

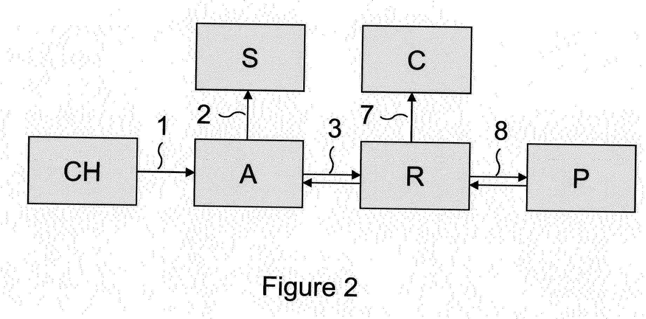

Le procédé selon l'invention est décrit en référence à la figure 2.

L'unité de combustion CH, par exemple une chaudière, produit des fumées de combustion évacuées par le conduit 1. Dans CH, on effectue une combustion d'un combustible comportant des éléments soufrés, avec un comburant, par exemple de l'air. Le combustible peut être du charbon, du gaz naturel, du pétrole, de la biomasse. La présente invention s'applique également au traitement des gaz de cimenteries ou d'aciéries.

Selon l'invention, les fumées de combustion issues de l'unité CH sont directement introduites par le conduit 1 dans l'unité A de captage du $CO_2$, sans subir d'étape de désulfuration. Dans l'unité A, les fumées de combustion sont mises en contact avec une solution absorbante. Selon l'invention, la solution absorbante est composée d'une solution aqueuse d'eau et de TMHDA qui de manière surprenante, présente la propriété de se dégrader plus faiblement en présence d'oxyde de soufre, que les amines généralement utilisées comme la MEA. La résistance de la TMHDA à la dégradation en présence d'oxydes de soufre est illustrée par l'exemple présenté ci-après.

La solution absorbante mise en oeuvre dans le procédé selon l'invention est composée d'une solution aqueuse comportant le composé réactif suivant : N,N,N',N'-Tétraméthylhexane-1,6-diamine, couramment nommée TMHDA.

La TMHDA peut être en concentration variable par exemple comprise entre 10% et 90% poids, de préférence entre 15% et 60% poids, de manière très préférée entre 20% et 50% poids, dans la solution aqueuse.

La solution absorbante peut contenir entre 10% et 90% poids d'eau, de préférence entre 50% et 80% poids d'eau.

Dans un mode de réalisation, les composés réactifs de la solution absorbante peuvent être mélangés avec une autre amine, contenant au moins une fonction amine primaire ou secondaire afin de jouer un rôle d'activateur de la réaction d'absorption du $CO_2$. La solution absorbante peut contenir de l'activateur, dans une proportion supérieure à 0,5% jusqu'à une concentration de 20% poids, de préférence inférieure à 15% poids, de préférence inférieure à 10% poids.

Une liste non exhaustive de composés pouvant être utilisés comme activateurs est donnée ci-dessous : MonoEthanolAmine, AminoEthylEthanolAmine, DiGlycolAmine, Pipérazine, N-(2-HydroxyEthyl)Pipérazine, N-(2-AminoEthyl)Pipérazine, N-MethylPipérazine, N-EthylPipérazine, N-PropylPipérazine, 1,6-HexaneDiAmine, 1,2,3,4-tetrahydroisoquinoline, 1,1,9,9-TetraMéthylDiPropylèneTriamine, Morpholine, Pipéridine, 3-(MetylAmino)PropylAmine, N-MethylBenzylAmine.

Dans un mode de réalisation, la solution absorbante à base de N,N,N',N'-tetramethylhexane-1,6-diamine peut aussi contenir d'autres composés organiques. Ainsi, la solution absorbante selon l'invention peut contenir des composés organiques non réactifs vis-à-vis des composés acides (couramment nommé "solvant physique"), et qui permettent d'augmenter la solubilité d'au moins un ou plusieurs composés acides de l'effluent gazeux. Par exemple la solution absorbante peut comporter entre 5% et 50% poids de solvant physique tel que des alcools, des ethers de glycol, des lactames, des pyrrolidones N-alkylées, des pipéridones N-alkylées, des cyclotétraméthylènesulfone, des N-alkylformamides, des N-alkylacétamides, des ethers-cétones ou des phosphates d'alkyles et leur dérivés. A titre d'exemple et de façon non limitative, il peut s'agir du méthanol, du tetraethylèneglycoldimethylether, du sulfolane ou de la N-formyl morpholine.

Dans l'unité A, la solution absorbante capte le $CO_2$, ainsi que les oxydes soufrés, tels que les SOx, principalement le $SO_2$, mais aussi le $SO_3$ présents dans les fumées de combustion.

Les fumées désacidifiées, c'est-à-dire appauvries en $CO_2$ et en oxydes de soufre, sont évacuées de A par le conduit 2 dans l'appareil S qui peut effectuer une étape de traitement ultérieure ou un rejet à l'atmosphère par l'intermédiaire d'une cheminée. La solution absorbante chargée en composés acides est envoyée dans une unité de régénération R par le conduit 3. Dans l'unité de régénération, la solution absorbante est chauffée pour libérer sous forme gazeuse le $CO_2$ capté.

Le $CO_2$ est évacué de R par le conduit 7 vers une unité de traitement ultérieure C, par exemple une étape de conditionnement du $CO_2$ pour transport et séquestration du $CO_2$ dans un réservoir souterrain. La solution absorbante régénérée est recyclée dans l'unité d'absorption A pour être mise en contact avec les fumées de combustion.

La solution absorbante régénérée est appauvrie en $CO_2$ mais comporte des composés soufrés. Selon l'invention, une portion de la solution absorbante régénérée est prélevée périodiquement ou en continue par le conduit 8 afin d'être purifiée dans l'unité P, avant d'être réintroduite dans l'unité A ou R. L'unité P permet de retirer les composés soufrés de la solution absorbante. L'unité d'extraction P est une étape de distillation.

Dans le cas où l'on effectue une distillation dans l'unité P, on neutralise au préalable les oxydes de soufre contenu dans la solution régénérée par d'une base forte, par exemple par introduction de soude ou de potasse dans la solution absorbante. Puis, on chauffe la solution absorbante jusqu'à en vaporiser une partie. Par exemple, la solution absorbante est introduite dans un ballon de distillation. La fraction vaporisée est recyclée dans l'unité R. Les sels non régénérables constitués d'oxydes de soufre neutralisés par la base forte s'accumulent en fond du ballon de distillation. Les sels sont évacués du ballon de distillation, en continu ou de manière périodiquement.

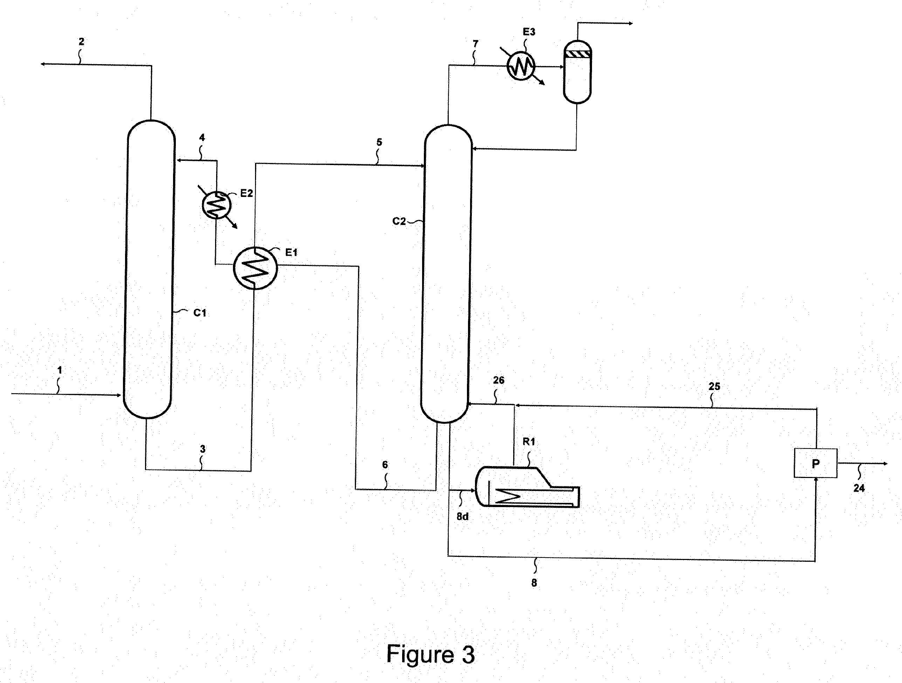

Les figures 3, 4 et 5 décrivent en détail les unités de captage A et de régénération R et d'extraction P de la figure 2 du procédé selon l'invention. Les références des figures 3, 4 et 5 identiques à celles de la figure 2 désignent les mêmes éléments.

En référence à la figure 3, les fumées de combustion issu d'une unité de combustion et circulant dans le conduit 1 sont mises en contact dans la colonne d'absorption C1 avec la solution absorbante arrivant par le conduit 4. La colonne C1 est équipée d'internes de mise en contact gaz/liquide, par exemple des plateaux de distillation, un garnissage structuré ou disposé en vrac.

Dans la colonne C1, les composés TMHDA de la solution absorbante réagissent avec les composés acides, c'est à dire avec le $CO_2$ et les oxyde de soufre contenus dans les fumées de combustion, en formant des sels solubles dans la solution. Les fumées appauvries en composés soufrés et en $CO_2$ sont évacuées de C1 par le conduit 2. La solution absorbante enrichie en composés acides, sous forme de sels dissous dans l'eau, est évacuée de C1 par le conduit 3.

Ensuite, la solution absorbante est envoyée dans l'échangeur de chaleur E1. Elle ressort à une température plus élevée par le conduit 5.

La solution absorbante issue de E1 est introduite par le conduit 5 dans la colonne C2 pour être régénérée. Dans C2, la régénération thermique est effectuée par distillation ou bien entraînement du $CO_2$ par la vapeur, opération couramment nommée "strippage". La colonne C2 est équipée d'un rebouilleur R1 et d'internes de mise en contact gaz/liquide. Dans C2, les composés réactifs de la solution absorbante sont séparés du $CO_2$. Le $CO_2$ est libéré sous forme gazeuse et évacués de C2 par le conduit 7. Le flux 7 de vapeur d'eau riche en composés acides est partiellement condensé par refroidissement dans E3 et les condensats sont renvoyés en tête de C2 à titre de reflux. La solution absorbante obtenue en fond de C2 est appauvrie en $CO_2$ mais contient des oxydes de soufre sous forme de sels non régénérables, dénommés ci-après par "soufre".

Une partie de la solution absorbante régénérée recueillie en fond de C2 est évacuée par le conduit 6 pour être réintroduite dans la colonne C1.

Une autre portion de la solution absorbante évacuée en fond de C2 par le conduit 8 est introduite dans R1 par le flux 8d afin d'y être chauffée et réintroduite par le conduit 26 dans C2 pour réaliser la régénération de la solution absorbante.

Une autre portion de la solution absorbante évacuée en fond de C2 par le conduit 8 est introduit dans le dispositif d'extraction de soufre P. Dans l'unité P, on met en oeuvre une étape de distillation. Le soufre extrait est évacué par le conduit 24. La solution absorbante débarrassée du soufre peut être introduite dans la colonne C2, par exemple par les conduits 25 et 26. Alternativement, le conduit 25 peut directement introduire dans C2 la solution absorbante débarrassée du soufre à un niveau intermédiaire situé entre les deux points d'injection des conduits 5 et 26.

La chaleur libérée par le refroidissement de la solution absorbante récupérée en fond de la colonne C2 peut être récupérée pour chauffer différents flux devant être régénérés. Par exemple, en référence à la figure 3, la solution absorbante circulant dans le conduit 6 permet de réchauffer, dans l'échangeur de chaleur E1, la solution absorbante chargée en composés acides circulant par le conduit 3. Ensuite, cette solution est refroidie par l'échangeur E2 à la température de fonctionnement de la colonne C1, puis elle est introduite dans C1 par le conduit 4.

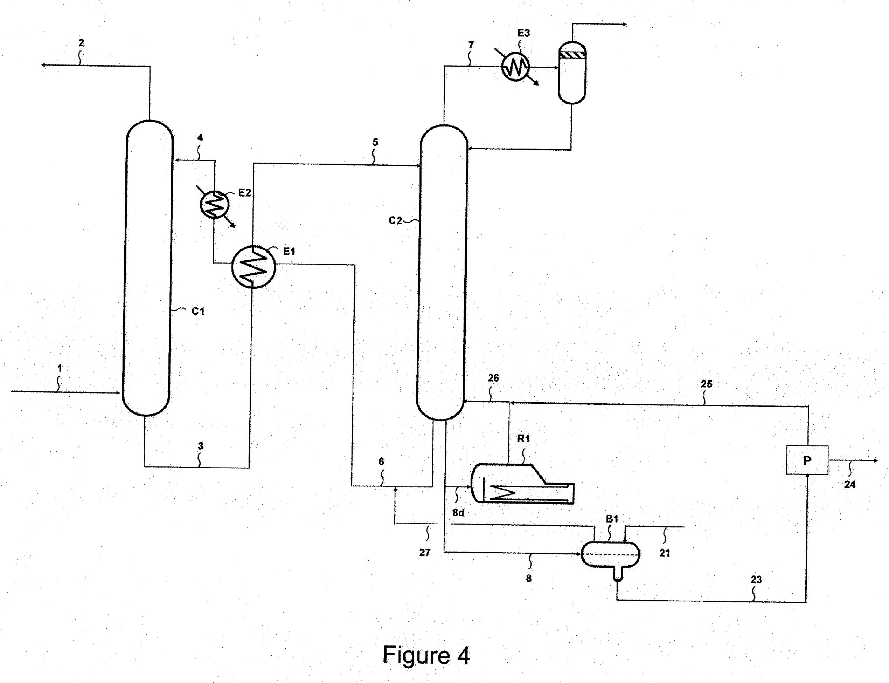

Le procédé schématisé par la figure 3 est complété en effectuant une étape de séparation de la solution absorbante en aval de la colonne C2, comme représenté par la figure 4. Les références de la figure 4 identiques à celles de la figure 3 désignent les mêmes éléments.

La TMHDA en solution aqueuse présente la propriété de former deux phases liquides séparables lorsqu'elle a absorbé une quantité déterminée de composés acides et lorsque la température est supérieure à une température critique. En d'autres termes, la solution aqueuse de TMHDA se sépare en deux phases liquides lorsque sa température dépasse une température critique de démixtion, c'est-à-dire un seuil de température.

En référence à la figure 4, la partie de la solution absorbante prélevée en fond de la colonne C2 par le conduit 8 est introduite dans le ballon de séparation B1. La solution absorbante est à une température supérieure à la température critique pour laquelle la solution absorbante se sépare en deux phases : une phase riche en TMHDA et une phase riche en eau. Dans le dispositif B1, la solution absorbante peut être séparée par décantation, centrifugation ou filtration. B1 permet de séparer la phase riche en eau de la phase riche en composés réactifs. L'opération de séparation dans B1 peut éventuellement être effectuée à une pression différente de la pression dans C2 pour faciliter ladite étape de séparation.

Suite à la régénération thermique dans C2, la solution absorbante est à une température supérieure à la température critique pour laquelle la solution absorbante se sépare en deux phases : une phase riche en TMHDA et une phase riche en eau. Les sels non régénérables se concentrent dans la phase riche en eau, milieu beaucoup plus dispersant. L'eau et les sels, neutralisés au préalable par l'ajout de soude ou de potasse dans B1, sont envoyés à l'étape de purification P par le flux 23. Dans l'unité P, on met en oeuvre une étape de distillation telle que décrite précédemment. Le flux purifié dans P est envoyé par le conduit 25, puis 26 en fond de la colonne C2 et les sels non régénérables sont évacués de P par le conduit 24. Alternativement, le conduit 25 peut directement introduire dans C2 la solution absorbante débarrassée du soufre à un niveau intermédiaire situé entre les deux points d'injection des conduits 5 et 26.

On effectue l'injection d'une base forte par le flux 21 dans le ballon B1, par exemple de la soude ou de la potasse, pour libérer et séparer dans B1 la fraction de composés réactifs piégés sous forme de sels. Les acides forts, notamment les oxydes de soufre, sont alors piégés sous la forme de sels de sodium ou de potassium.

Un avantage supplémentaire du procédé de la figure 4 est la réduction des équipements d'extraction de soufre de l'unité P qui ne traitent qu'une fraction réduite de la solution absorbante dans cette mise en oeuvre particulière. Par ailleurs, l'étape de séparation liquide-liquide réalisée dans B1 permet de réduire la concentration de l'amine dans le flux 23 envoyé à l'unité P. La vaporisation de l'amine est plus coûteuse que celle de l'eau, compte tenu de sa plus faible tension de vapeur. L'étape de séparation liquide-liquide permet donc de diminuer les coûts opératoires.

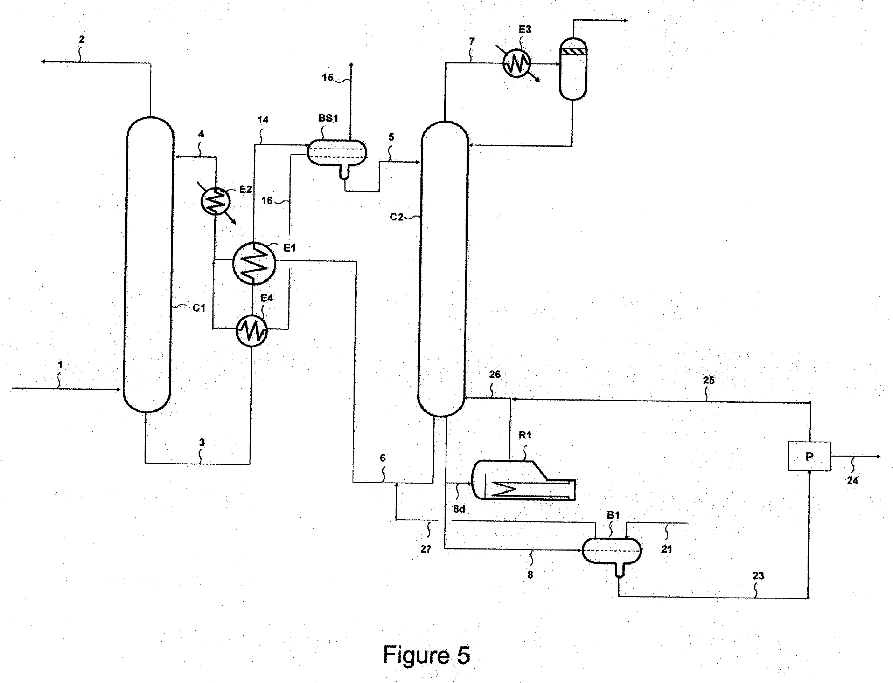

Le procédé schématisé par la figure 4 peut être complété en effectuant une étape de séparation de la solution absorbante en amont de la colonne C2, comme représenté par la figure 5. Les références de la figure 5 identiques à celles de la figure 3 et 4 désignent les mêmes éléments.

En référence à la figure 5, la solution absorbante chargée en composés acides obtenue en fond de C1 est réchauffée dans E1. Elle ressort de E1 par le conduit 14 à une température plus élevée. Dans l'échangeur E1, la solution absorbante chargée en composés acides est chauffée jusqu'à dépasser la température critique à laquelle la solution chargée en composés acides forme deux phases liquides séparables. Par exemple, la solution absorbante chargée en composés acides est chauffée à une température comprise entre 50°C et 150°C, de préférence entre 70°C et 120°C. Ainsi, le fluide circulant dans le conduit 14 est composé de deux phases liquides séparables : une phase riche en composés acides et une phase pauvre en composés acides. De plus, sous l'effet de la hausse de température, une partie des composés acides est libérée sous forme gazeuse. Les trois phases du fluide circulant dans le conduit 14 sont séparées dans le ballon de séparation BS1. Par exemple, les deux phases liquides sont séparées dans BS1 par décantation, centrifugation ou filtration. La fraction gazeuse issue en tête de BS1 est extraite par le conduit 15 et peut éventuellement être mélangée au flux 7. Une première fraction liquide enrichie en composés acides, c'est-à-dire enrichie en composés réactifs ayant réagi avec les composés acides, est envoyée par le conduit 5 dans la colonne de régénération C2. Une deuxième fraction liquide appauvrie en composés acides, c'est-à-dire enrichie en composés réactifs n'ayant pas réagi, est évacuée de BS1 par le conduit 16 et refroidie dans E4. En référence à la figure 5, la fraction liquide 16 est introduite dans la colonne C1, en étant mélangée avec la portion de solution absorbante circulant dans le conduit 4.

Exemple : Stabilité en présence de $SO_2$ et $O_2$

La molécule de N,N,N',N'-Tétraméthylhexane-1,6-diamine présente la particularité d'être particulièrement résistante aux dégradations qui peuvent se produire avec les oxydes de soufre, et ceci même en présence d'oxygène, qui est connu pour être la principale source de dégradation des amines dans une unité de captage du $CO_2$ en post-combustion.

Les performances en terme de stabilité des solutions aqueuses de TMHDA à 35% poids sont comparées à celle des solutions aqueuses de MonoEthanolAmine à 30% poids, qui constitue le solvant de référence pour une application de captage des fumées en post-combustion.

Pour réaliser des essais comparatifs, on introduit une quantité de connue de $SO_2$ dans des solutions aqueuses de TMHDA à 35% poids et de MEA à 30% poids, pour obtenir un taux de neutralisation des fonctions amines de 1% (en tenant compte du fait que la TMHDA est une diamine).

$$\alpha_{SO2} = \frac{n_{H_2SO_3}}{n_{MEA}} = \frac{n_{H_2SO_3}}{2 \cdot n_{TMHDA}}$$

Les solutions aqueuses d'amine ainsi préparées sont dégradées au sein de réacteurs fermés, chauffés à une température T de 140°C. Deux séries d'essais ont été réalisées. Dans la première série, les réacteurs ont été mis sous pression avec 20 bar d'air (constitué d'$O_2$ et de $N_2$). Dans une seconde série, aucun gaz n'a été introduit : la phase gaz est alors constitué de la vapeur de solvant à la température T. La phase liquide est agitée à l'aide d'un barreau aimanté. Au bout de quinze jours, un échantillon représentatif de la phase liquide est prélevé, puis analysé par différentes techniques, comme par exemple la chromatographie ionique. Cette technique permet de séparer l'amine de départ des produits de dégradation, et ainsi de la quantifier. Le tableau ci-dessous donne le taux de dégradation TD de la solution aqueuse d'amine, dans différentes conditions, défini par l'équation ci-dessous :

$$TD(\%) = \frac{[A \min e] - [A \min e]^\circ}{[A \min e]^\circ}$$

où [Amine] est la concentration de l'amine de départ dans l'échantillon dégradé, et [Amine]° est la concentration de l'amine dans la solution non dégradée. Plus le taux de dégradation TD est faible, plus on peut considérer que l'amine est stable.

Le tableau ci-dessous donne le taux de dégradation TD de différentes solutions absorbantes, pour une température de 140°C, en absence et en présence d'oxygène.

| Amine | Concentration | $\alpha_{SO2}$ | T (°C) | Taux de dégradation | $PP_{O2} = 0$ bar | $PP_{O2} = 4,2$ bar |
|-------|--------------|--------|--------|---------------------|-------------------|---------------------|
| TMHDA | 35 % poids | 1% | 140 | | 1,2 | 12,1 |
| MEA | 30 % poids | 1% | 140 | | 1,6 | 16,2 |

Cet exemple montre que la N,N,N',N'-tetramethylhexane-1,6-diamine, comme amine dans une solution absorbante, permet d'obtenir un taux de dégradation 25% plus faible que celui des solutions absorbantes à base de MonoEthanolAmine, que cela soit dans des conditions douces (sans oxygène) ou sévères (avec oxygène).

**EP 2 525 895 B1**

## Revendications

1. Procédé de décarbonatation et de désulfuration d'une fumée de combustion produite par la combustion d'un combustible contenant du soufre pour produire une fumée de combustion comportant du $CO_2$ et des oxydes de soufre, dans lequel on effectue les étapes suivantes :

   a) on met en contact la fumée de combustion avec une solution aqueuse comportant de la N,N,N',N'-Tétraméthylhexane-1,6-diamine dans une zone de contact (A) de manière à obtenir une fumée de combustion appauvrie en $CO_2$ et en oxydes de soufre et une solution absorbante chargée en $CO_2$ et en oxydes de soufre,
   b) on régénère au moins une partie de la solution absorbante chargée en $CO_2$ et en oxydes de soufre dans une zone de régénération (R) de manière à libérer du $CO_2$ sous forme gazeuse et à obtenir une solution absorbante régénérée,
   c) on prélève au moins une première portion de la solution absorbante régénérée, on introduit un produit basique dans ladite première portion de la solution absorbante régénérée, on sépare ladite première portion de la solution absorbante régénérée en une phase liquide enrichie en eau et une phase liquide enrichie en N,N,N',N'-Tétraméthylhexane-1,6-diamine, puis on soumet au moins une fraction de la phase liquide enrichie en eau à une opération d'extraction (P) des oxydes de soufre pour obtenir une solution absorbante appauvrie en oxyde de soufre, ladite opération d'extraction (P) des oxydes de soufre étant réalisée par distillation en vaporisant ladite fraction de la phase liquide enrichie en eau de manière à obtenir une fraction vaporisée et une fraction liquide, la fraction vaporisée étant introduite dans la zone de régénération (R),
   d) on recycle une deuxième portion de la solution absorbante régénérée et ladite phase liquide enrichie en N,N,N',N'-Tétraméthylhexane-1,6-diamine issue de la séparation à l'étape c) en tant que solution aqueuse comportant de la N,N,N',N'-Tétraméthylhexane-1,6-diamine à l'étape a).

2. Procédé selon la revendication 1, dans lequel le produit basique est choisi parmi la soude et la potasse.

3. Procédé selon la revendication 1, dans lequel la phase liquide enrichie en N,N,N',N'-Tétraméthylhexane-1,6-diamine est introduite dans la zone de contact (A).

4. Procédé selon l'une des revendications 1 à 3, dans lequel avant l'étape b), on effectue une étape de séparation d'au moins une partie de la solution absorbante chargée en C02 et en oxydes de soufre pour produire une phase enrichie en eau et une phase enrichie en N,N,N',N'-Tétraméthylhexane-1,6-diamine, la phase enrichie en eau étant introduite dans la zone de régénération, la phase enrichie en N,N,N',N'-Tétraméthylhexane-1,6-diamine étant introduite dans la zone de mise en contact.

5. Procédé selon la revendication 4, dans lequel avant l'étape de séparation, la solution absorbante chargée en composés acides est chauffée à une température comprise entre 50°C et 150°C.

6. Procédé selon l'une des revendications précédentes, dans lequel la solution absorbante comporte entre 20% et 50% poids de N,N,N',N'-Tétraméthylhexane-1,6-diamine et entre 50% et 80% poids d'eau.

## Patentansprüche

1. Verfahren zur Entkarbonisierung und Entschwefelung eines Verbrennungsgases, das durch die Verbrennung eines Brennstoffes, der Schwefel enthält, erzeugt wird, um ein Verbrennungsgas zu erzeugen, das $CO_2$ und Schwefeloxide enthält, bei dem die folgenden Schritte durchgeführt werden:

   a) Inkontaktbringen des Verbrennungsgases mit einer wässerigen Lösung, umfassend N,N,N',N'-Tetramethylhexan-1,6-Diamin in einer Kontaktzone (A), um ein an $CO_2$ und an Schwefeloxiden armes Verbrennungsgas und eine mit $CO_2$ und Schwefeloxiden angereicherte Absorptionslösung zu erhalten,
   b) Regenerieren mindestens eines Teils der mit $CO_2$ und Schwefeloxid angereicherten Absorptionslösung in einer Regenerationszone (R), um $CO_2$ in gasförmiger Form freizusetzen und eine regenerierte Absorptionslösung zu erhalten,
   c) Entnehmen mindestens eines ersten Teils der regenerierten Absorptionslösung, Einleiten eines basischen Produktes in den ersten Teil der regenerierten Absorptionslösung, Trennen des ersten Teils der regenerierten Absorptionslösung in eine mit Wasser angereicherte flüssige Phase und eine mit N,N,N',N'-Tetramethylhexan-1,6-Diamin angereicherte flüssige Phase, dann Unterwerfen mindestens einer Fraktion der mit Wasser ange-

7

reicherten flüssigen Phase einem Extraktionsvorgang (P) der Schwefeloxide, um eine an Schwefeloxid arme Absorptionslösung zu erhalten, wobei der Extraktionsvorgang (P) der Schwefeloxide durch Destillation erfolgt, wobei die Fraktion der mit Wasser angereicherten flüssigen Phase verdampft wird, um eine verdampfte Fraktion und eine flüssige Fraktion zu erhalten, wobei die verdampfte Fraktion in die Regenerationszone (R) eingeleitet wird,

d) Rezyklieren eines zweiten Teils der regenerierten Absorptionslösung und der mit N,N,N',N'-Tetramethylhexan-1,6-Diamin angereicherten flüssigen Phase, die von der Trennung aus Schritt c) stammen, als wässerige Lösung, umfassend N,N,N',N'-Tetramethylhexan-1,6-Diamin aus Schritt a).

2. Verfahren nach Anspruch 1, bei dem das basische Produkt unter Natriumhydroxid und Kaliumhydroxid ausgewählt ist.

3. Produkt nach Anspruch 1, bei dem die mit N,N,N',N'-Tetramethylhexan-1,6-Diamin angereicherte flüssige Phase in die Kontaktzone (A) eingeleitet wird.

4. Verfahren nach einem der Ansprüche 1 bis 3, bei dem vor dem Schritt b) ein Schritt der Trennung mindestens eines Teils der mit $CO_2$ und Schwefeloxiden angereicherten Absorptionslösung erfolgt, um eine mit Wasser angereicherte Phase und eine mit N,N,N',N'-Tetramethylhexan-1,6-Diamin angereicherte Phase zu erhalten, wobei die mit Wasser angereicherte Phase in die Regenerationszone eingeleitet wird, und die mit N,N,N',N'-Tetramethylhexan-1,6-Diamin angereicherte Phase in die Kontaktzone eingeleitet wird.

5. Verfahren nach Anspruch 4, bei dem vor dem Trennungsschritt die mit sauren Verbindungen angereicherte Absorptionslösung auf eine Temperatur zwischen 50°C und 150°C erhitzt wird.

6. Verfahren nach einem der vorhergehenden Ansprüche, bei dem die Absorptionslösung zwischen 20 Gew.-% und 50 Gew.-% N,N,N',N'-Tetramethylhexan-1,6-Diamin und zwischen 50 Gew.-% und 80 Gew.-% Wasser umfasst.

## Claims

1. A method of decarbonating and desulfurizing a combustion fume produced by the combustion of a sulfur-containing fuel to generate a combustion fume comprising $CO_2$ and sulfur oxides, wherein the following stages are carried out:

a) contacting the combustion fume with an aqueous solution containing N,N,N',N'-tetramethylhexane-1,6-diamine in a contact area (A) so as to obtain a combustion fume depleted in $CO_2$ and sulfur oxides and an absorbent solution laden with $CO_2$ and sulfur oxides,

b) regenerating at least part of the absorbent solution laden with $CO_2$ and sulfur oxides in a regeneration area (R) so as to release $CO_2$ in gas form and to obtain a regenerated absorbent solution,

c) withdrawing at least a first portion of the regenerated absorbent solution, feeding a basic material into said first regenerated absorbent solution portion, separating said first regenerated absorbent solution portion into a liquid phase enriched in water and a liquid phase enriched in N,N,N',N'-tetramethylhexane-1,6-diamine, then subjecting at least a fraction of the water-enriched liquid phase to a sulfur oxide extraction operation (P) so as to obtain an absorbent solution depleted in sulfur oxide, said sulfur oxide extraction operation (P) being carried out through distillation by vaporizing said water-enriched liquid phase fraction so as to obtain a vaporized fraction and a liquid fraction, the vaporized fraction being fed into regeneration area (R),

d) recycling a second portion of the regenerated absorbent solution and said liquid phase enriched in N,N,N',N'-tetramethylhexane-1,6-diamine resulting from the separation in stage c) as an aqueous solution containing N,N,N',N'-tetramethylhexane-1,6-diamine in stage a).

2. A method as claimed in claim 1, wherein the basic material is selected from among soda and potash.

3. A method as claimed in claim 1, wherein the liquid phase enriched in N,N,N',N'-tetramethylhexane-1,6-diamine is fed into contact area (A).

4. A method as claimed in any one of claims 1 to 3 wherein, prior to stage b), a stage of separating at least part of the absorbent solution laden with $CO_2$ and sulfur oxides is carried out to generate a phase enriched in water and a phase enriched in N,N,N',N'-tetramethylhexane-1,6-diamine, the phase enriched in water being fed into the regeneration area and the phase enriched in N,N,N',N'-tetramethy)hexane-1,6-diamine being fed into the contact area.

5. A method as claimed in claim 4 wherein, prior to the separation stage, the absorbent solution laden with acid compounds is heated to a temperature ranging between 50°C and 150°C.

6. A method as claimed in any one of the previous claims, wherein the absorbent solution comprises between 20% and 50% by weight of N,N,N',N'-tetramethylhexane-1,6-diamine and between 50% and 80% by weight of water.

Figure 1

Figure 2

Figure 3

Figure 4

Figure 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 553643 A

- EP 815922 A

**Littérature non-brevet citée dans la description**

- **SUPAP et al.** Kinetics of sulfur dioxide and oxygene induced dégradation of aqueous monoethanolamine solution during CO2 absorption from power plant flue gas streams. *International Journal of Greenhouse Gas Control,* 2009, vol. 3, 133-142

- **SUPAP et al.** Kinetics of sulfur dioxide and oxygène induced dégradation of aqueous monoethanolamine solution during CO2 absorption from power plant flue gas streams. *International Journal of Greenhouse Gas Control,* 2009, vol. 3, 133-142